# EUROPEAN PATENT APPLICATION

(11) **EP 1 237 220 A2**
(43) Date of publication of application: **04.09.2002**
(21) Application number: 02004684.3
(22) Date of filing: 28.02.2002
(51) Int. Cl.: H01M 8/10

(54) **Polymer electrolyte membrane fuel cell**

(30) Priority: 02.03.2001 JP 2001058277
(71) Applicant: National Institute of Advanced Industrial Science and Technology, Tokyo 100-8901 (JP)
(72) Inventor: Okada, Tatsuhiro, Tsukuba-shi, Ibaraki (JP); Oguro, Keisuke, Tsukuba-shi, Ibaraki (JP); Ishimaru, Shin-ya, 1-1-1 Tennodai, Tsukuba-shi, Ibaraki (JP); Ishida, Masayoshi, 1-1-1 Tennodai, Tsukuba-shi, Ibaraki (JP); Yoshitake, Masaru, Kanagawa-ku, Yokohama-shi, Kanagawa (JP)
(74) Representative: Forstmeyer, Dietmar, Dr. rer. nat., Dipl.-Chem.

(57) **Abstract**

A fuel cell, which has a tubular polymer electrolyte membrane, with a fuel electrode on one of inner and outer sides of the membrane, and with an air electrode on the other side of the membrane.

## Description

### FIELD OF THE INVENTION

The present invention relates to a low-temperature operating-type fuel cell using a polymer electrolyte, and more particularly to a transportable fuel cell that can be made compact.

### BACKGROUND OF THE INVENTION

Fuel cells include low-temperature operating-type fuel cells, which operate at an operating temperature of as low as 300°C or less, such as polymer electrolyte fuel cells, alkali fuel cells, phosphoric acid fuel cells, and direct methanol fuel cells. Of those, in particular, those having a polymer membrane as an electrolyte, such as the polymer electrolyte fuel cell and the direct methanol fuel cell, have a number of merits because the electrolyte is not a liquid. For example, if a pressure difference is caused between fuel gas and oxidizer gas (air or oxygen), the fuel cell is run with no problem. In addition, by setting the thickness of the electrolyte membrane to several tens of micrometers or less, improvement in output power, compactness, and stacking capability can be achieved at the same time. Further, the fuel cell is excellent in starting characteristics and load responsiveness. Accordingly, application of such fuel cells to an oncoming electric automobile or domestic stationary power source has recently been receiving attention.

Furthermore, in other application fields than those described above, application of a fuel cell as a small cell (battery), such as one in a portable device or a transportable power source is gaining a promising feature. Since a fuel cell can generate power instantaneously as soon as a fuel is supplied, it can reduce time required for charging and is sufficiently competitive in cost, as compared with a secondary battery.

A conventional fuel cell is configured such that catalyst layers serving as a fuel electrode and an air electrode (oxygen electrode), respectively, are arranged on both sides of an electrolyte (flat sheet or flat membrane), and further carbon- or metal-made separator components (materials) each furnished with channels for flowing fuel gas and air (oxygen gas) are provided so as to sandwich the catalyst layers to form a unit that is called a single-cell. A separator is inserted between any adjacent two cells. The separator prevents mixing of fuel (e.g. hydrogen) that flows into the fuel electrode and air (or oxygen) that flows into the air electrode when cells are stacked, and at the same time, the separator functions as an electronic conductor for coupling two cells in series. By stacking a necessary number of such single-cells, a fuel cell stack is assembled, and this is further integrated with apparatuses for feeding fuel gas and oxidizer gas, a control device and the like, to fabricate a fuel cell, by use of which power generation is performed.

However, although such a flat-type fuel cell construction is suitable for a design of stacking a number of electrodes (fuel electrode and air electrode) having large areas, it has a great disadvantage that it cannot respond to the requirement of miniaturization (making it small in size).

Recently, the design of a fuel cell has been proposed in which only flat-type single-cells are arranged in parallel. In such a case, it is easy to fabricate a small chip and it may have some merits depending on the shape of a small apparatus in which the cell is incorporated. However, it cannot flexibly accommodate the shapes of various small apparatuses. In particular, the problem as to how to seal the fuel electrode in order to prevent the leakage of fuel remains to be solved.

### SUMMARY OF THE INVENTION

The present invention is a fuel cell, which comprises a tubular polymer electrolyte membrane, with a fuel electrode on one of inner and outer sides of the membrane, and with an air electrode on the other side of the membrane.

Other and further features and advantages of the invention will appear more fully from the following description, take in connection with the accompanying drawings.

### BRIEF DESCRIPTION OF THE DRAWINGS

Fig. 1(a) is a schematic diagram showing one example of the fuel cell using a liquid fuel, according to the present invention.
Fig. 1(b) is an enlarged cross-sectional view of the fuel cell shown in Fig. 1(a) along the I-I line therein.
Fig. 2(a) is a schematic diagram showing one example of the fuel cell using a gaseous fuel, according to the present invention.
Fig. 2(b) is an enlarged cross-sectional view of the fuel cell shown in Fig. 2(a) along the II-II line therein.
Fig. 3(a) is a graph illustrating current-potential characteristics in one example of the fuel cell using methanol fuel, according to the present invention.
Fig. 3(b) is a graph illustrating current-power characteristics of the fuel cell shown in Fig. 3(a).
Fig. 4(a) is a graph illustrating current-potential characteristics in another example of the fuel cell using methanol fuel, according to the present invention.
Fig. 4(b) is a graph illustrating current-power characteristics of the fuel cell shown in Fig. 4(a).

### DETAILED DESCRIPTION OF THE INVENTION

According to the present invention, there are provided the following means:
(1) A fuel cell, comprising a tubular polymer electrolyte membrane, with a fuel electrode on one of inner and outer sides of the membrane, and with an air electrode on the other side of the membrane;
(2) The fuel cell according to the item (1) above, wherein the fuel electrode and the air electrode each are composed of a carbon particle material on the surface of which catalyst fine-particulates are dispersed and loaded;
(3) The fuel cell according to the item (1) above, wherein the tubular polymer electrolyte membrane has a catalyst layer deposited or coated on a surface thereof;
(4) The fuel cell according to any one of the items (1) to (3) above, wherein fuel is brought into contact with the fuel electrode on the surface of the tubular polymer electrolyte membrane, and an oxidizer is brought into contact with the air electrode on the surface of the tubular polymer electrolyte membrane; and
(5) The fuel cell according to any one of the items (1) to (4) above, wherein the fuel cell is utilized as a power source of a portable device.

The inventors of the present invention have found that the above-mentioned problems in the conventional fuel cells can be solved at a time, by constructing the fuel cell as follows. That is, a polymer electrolyte membrane that has conventionally been stacked one on another in a flat plate form is formed in a tubular (hollow) form. Further, catalyst layers are arranged on inner and outer sides of the tube so as to serve either as a fuel electrode or an air electrode.

Forming the polymer electrolyte membrane in a tubular form makes it possible to cope with miniaturization (making it small size) by making the tubular electrolyte membrane smaller in diameter. Further, designing the length of tube and thickness of membrane as appropriate, and further connecting the resultant units to each other as appropriate can give rise to cells that can respond to various powers. Since the inside of the tube is excellent in gas tightness, it is particularly suitable for constructing a fuel electrode. Further, the tubular (hollow) polymer electrolyte membrane not only has excellent flexibility in shape but also retains mechanical strength, so that the issue of how to select the material for a stack raising a problem in designing fuel cell can be solved.

A specific structure of the fuel cell according to one embodiment of the present invention will be explained with reference to the accompanying drawings.

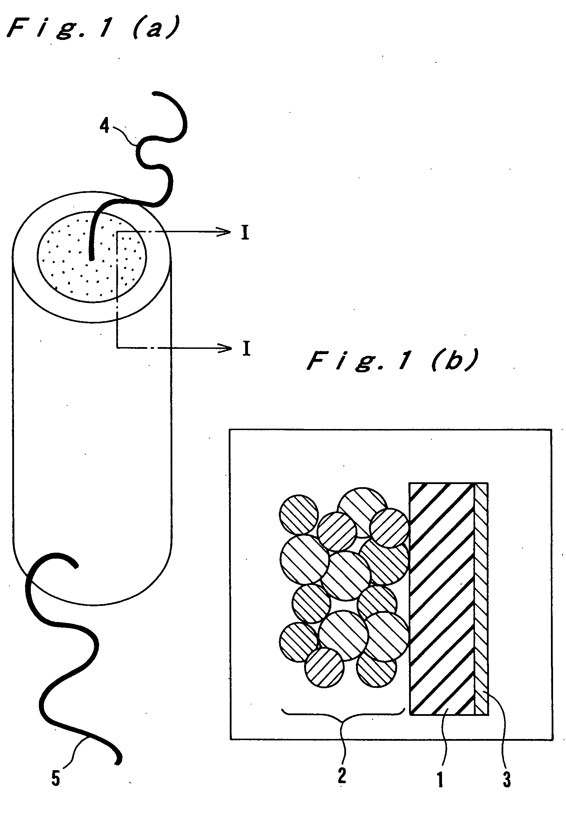

Figs. 1(a) and 1(b) show one embodiment of a direct methanol fuel cell that embodies the present invention, in which liquid methanol is incorporated into the fuel electrode without passing through a reformer and is used as the fuel.

Reference numeral 1 designates a tubular membrane made of a perfluorosulfonic acid-type polymer electrolyte, and on an inside of the tube are filled carbon particles 2 loaded with catalyst particles of platinum-ruthenium alloy (e.g. atomic composition, 50:50). The cavity of the tube is filled with 1.0-M sulfuric acid and a 3-M methanol solution. With this structure, the inside of the tubular membrane constitutes a fuel electrode. On the outer side of the tubular membrane, are deposited platinum particles 3, which are fixed thereto, by a chemical plating method, to constitute an air electrode (oxygen electrode), which contacts outside air. Reference numerals 4 and 5 designate external terminals connected to the catalyst layers on the inner side and outer side of the tube, respectively, and corresponding to the output terminals of the fuel cell. If there is a need for connecting units of the fuel cell to each other in series, this is achieved by sequentially connecting the terminal 4 of one fuel cell and the terminal 5 of another fuel cell to each other, successively.

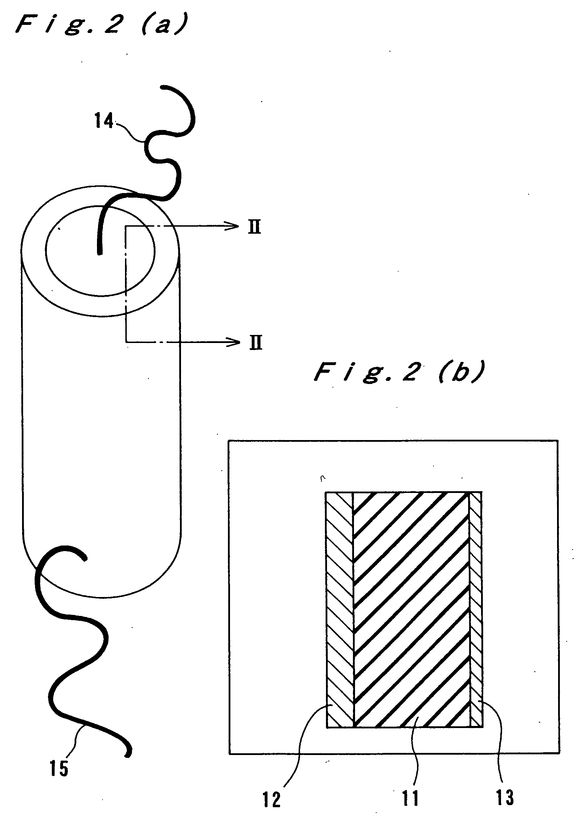

Figs. 2(a) and 2(b) show one embodiment of a structure of a fuel cell suitable for the case where the inside of the tube is filled with gaseous fuel, for example, hydrogen, methanol gas or the like. Reference numeral 11 designates a tubular membrane made of a perfluorosulfonic acid-type polymer electrolyte, the inner side of which has a platinum particle layer 12 that is formed by depositing and fixing platinum particles thereon by a chemical plating method, or that is formed by coating thereto carbon particles loaded with platinum catalyst. Hydrogen gas or methanol gas is introduced into the inside of the tube, so that the platinum particle layer 12 serves as a catalyst for the fuel electrode. On the outer side of the tube, are deposited and fixed platinum particles 13 by a chemical plating method, and the resultant platinum particles (13) layer constitutes an air electrode upon contacting outside air. Other features are the same as shown in Figs. 1(a) and 1(b). That is, external terminals 14 and 15 correspond to those 4 and 5 shown in Fig. 1(a), respectively.

As another embodiment of the fuel cell of the present invention (not shown), the fuel cell can be made to have the air electrode that is provided on the inner side of the tubular polymer electrolyte membrane, and the fuel electrode that is provided on the outer side of the tubular polymer electrolyte membrane. In this case, the oxidizer (air or oxygen) is made to pass through inside of the tube to contact with the air electrode, and fuel is fed to the outside of the tube, thereby making the fuel cell operate. As the method for feeding the fuel to the fuel electrode, for example, the entire fuel cell is contained in a vessel filled with the fuel, thereby the fuel electrode provided on the outer side of the tubular membrane is brought into contact with the fuel in the vessel, while keeping the state in which the inside of the tube is sealed not to be contaminated with the fuel.

The catalysts for fuel electrode and air electrode are preferably platinum family metals such as platinum, rhodium, palladium, ruthenium, and iridium. At least one of these metals is deposited and fixed on the inner side surface and outer side surface of the polymer membrane by a chemical plating method. Also, these catalysts may be fixed by coating or contact bonding the catalyst metal powder onto the membrane surface. Also, a method may be used in which the catalyst metal is dispersed as fine-particulates on the surface of carbon particles and the catalyst-loaded carbon particles are fixed on the inner and outer sides of the tubular membrane. Further, as described above, the catalyst-loaded carbon particles may be filled inside the tubular membrane.

The fuel electrode and air electrode may be provided on any one of the inner and outer sides of the tubular membrane. It is preferred that the fuel electrode is provided on the inner side and the air electrode is provided on the outer side of the membrane.

As stated above, with regards to the kind and loading amount of catalysts for the fuel electrode and air electrode and the method for loading the catalyst, those technologies conventionally used in constructing polymer electrolyte fuel cells, and those technologies conventionally used in forming electrodes employed in a water electrolysis method in which a solid polymer membrane is used (see, for example, Takenaka and Torikai, JP-A-55-38934 ("JP-A" means unexamined published Japanese patent application)) may be used as they are.

The polymer electrolyte membrane material to be used is not necessarily limited to the above-mentioned perfluorosulfonic acid-type polymer, and it may be selected from a perfluorocarbonic acid-type membrane, a poly-styrene-vinylbenzene-type membrane, a quaternary ammonium-type anion-exchange membrane, and the like, as appropriate.

Further, for example, a membrane made of benzimidazole-based polymer to which phosphoric acid is coordinated and a membrane made of polyacrylic acid impregnated with a concentrated potassium hydroxide solution are also effective, as the electrolyte membrane. In such cases, also for low-temperature operating-type fuel cells, such as phosphoric acid fuel cells and alkali fuel cells, whose operating temperature is about 300°C or less, use of a tubular electrolyte enables construction of fuel cells in which the fuel electrode and oxygen electrode are separated each other and which can be miniaturized (made compact).

The size (outer/inner diameters), length and film thickness of the tubular polymer electrolyte membrane may be set as appropriate depending on the output power required for the fuel cell, an apparatus to which the fuel cell is applied, or the like. Generally, the tube has an inner diameter of 0.2 to 10 mm, an outer diameter of 0.5 to 12 mm, and a length of 20 to 1,000 mm. Preferably, it has an inner diameter of 0.3 to 5 mm, an outer diameter of 0.5 to 7 mm, and a length of 30 to 500 mm.

The fuel is brought into contact with the fuel electrode on the inner or outer side of the tubular polymer electrolyte membrane in a gaseous or liquid state. The fuel may be fed continuously or filled in a space on the side of the fuel electrode in advance. The oxidizer is brought into contact with the air electrode through the side of the air electrode of the tubular polymer electrolyte membrane. Since the electrolyte is a tubular membrane, the inside of the tube is gas tight and no leakage occurs, so that there is no fear of mixing of the fuel and oxidizer without resort to any special pass (channel), separator, or the like. Further, since the tubular membrane endures the pressure difference across the membrane, control of gas pressure or pressurization can be readily performed.

The fuel cell of the present invention has high output density and low operating temperature of as low as 100°C so that a long-term durability can be expected. Because of easy handling, the fuel cell of the present invention can be utilized as a power source for mobile phones, video cameras, portable devices such as a note-type personal computer, or a transportable power source.

Note that the feature of the present invention resides in constructing a fuel cell by use of a tubular (hollow) polymer electrolyte membrane. The construction methods shown in Figs. 1(a) and 1(b) and Figs. 2(a) and 2(b) are only examples, and the present invention is not limited thereto with respect to the design of fuel cells, such as selection of catalysts, formation method of catalyst layers, selection of fuels, feeding methods for fuel and air, and the like.

The fuel cell of the present invention can be applied to small portable devices, it can readily retain its gas tightness of the fuel electrode when constructing the fuel cell, its catalyst loading property is good, it has flexibility in shape upon fabricating a stack, and it is excellent in productivity.

According to the present invention, by use of a tubular polymer electrolyte membrane, the fuel cell can be fabricated in a form such that it is adjusted to the contour of the device to which it is applied. Further, a low-temperature operating-type fuel cell that has extremely flexible, easy to make it small and light in weight can be constructed in a simple manner. In addition, for example, when the fuel electrode is formed on the inner side of the tube, injection of fuel is easy, no leakage of fuel occurs, and no cumbersome problem such as selection of sealing material or the like occurs.

Further, the method of loading catalysts and the area of electrode can be readily changed in design depending on the area where the fuel cell is to be applied. The fuel cell as a whole can be made compact (a small fuel cell) and its mass production at low costs is possible.

Hereinafter, the present invention will be illustrated in more detail by way of examples and with reference to the attached drawings, but the present invention should not be limited thereto.

### EXAMPLES

### Example 1

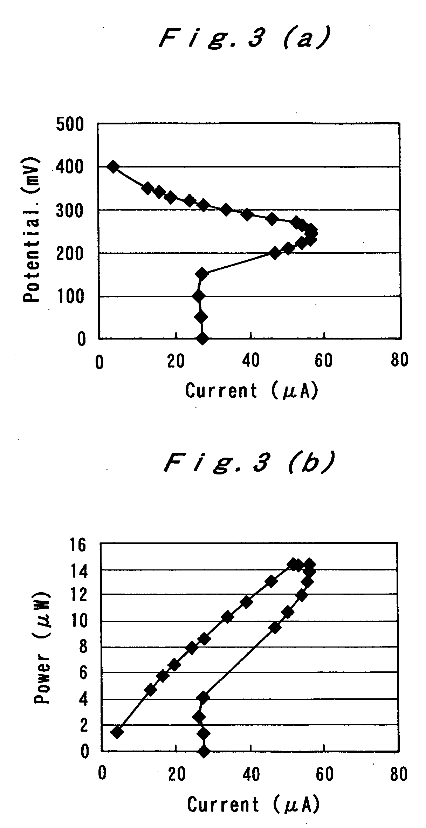

According to the design shown in Figs. 1(a) and 1(b), a mixed solution of 0.1 M sodium borohydride and 1 M sodium hydroxide was charged inside a tubular Flemion (trade name of a perfluorosulfonic acid-type polymer, produced by Asahi Glass Company, Ltd.) electrolyte membrane having an inner diameter of 0.3 mm, an outer diameter of 0.5 mm and a length of 60 mm, and a 0.1 M aqueous chloroplatinic acid solution was contacted with the outer side of the resultant tube, to form a layer of deposited platinum on the outer side of the tube by a chemical plating method. Thereafter, the entire tube was washed with a sulfuric acid solution, and excess unreacted substance was removed, and at the same time the electrolyte membrane was rendered acid-type. Then, in the inside of the tube was injected, by use of a syringe, a mixture of carbon particles being loaded thereon 45% by mass of a platinum-ruthenium alloy (atomic composition: 50:50) and a mixed solution of 1 M sulfuric acid and 3 M methanol, in a state of suspension. The tip of the syringe was used as it was as a connection terminal of the inner catalyst layer serving as the fuel electrode. On the other hand, a terminal was connected to the platinum deposit layer formed on the outer side of the tube serving as the air electrode. Thus, a single-cell of direct methanol fuel cell was constructed. Fig. 3(a) illustrates current-potential characteristics of the thus-obtained single-cell, while Fig. 3(b) illustrates current-power characteristics of the obtained single-cell.

### Example 2

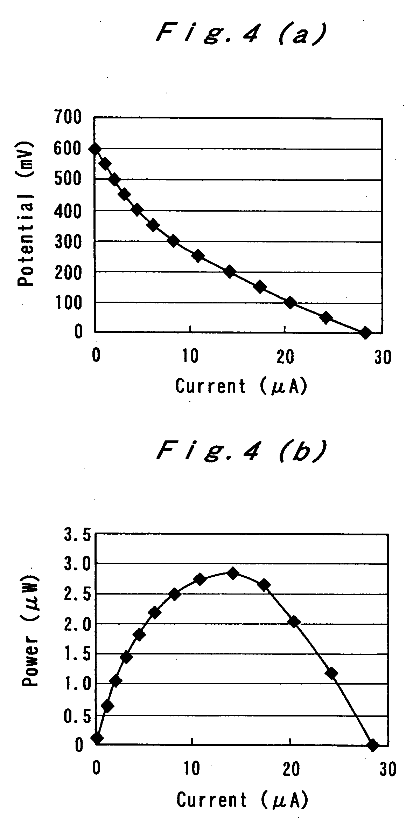

According to the design shown in Figs. 1(a) and 1(b), a mixed solution of 0.1 M sodium borohydride and 1 M sodium hydroxide was charged inside a tubular Flemion electrolyte membrane having an inner diameter of 0.3 mm, an outer diameter of 0.5 mm and a length of 60 mm, and a 0.1 M aqueous chloroplatinic acid solution was contacted with the outer side of the resultant tube, to form a layer of deposited platinum on the outer side of the tube by a chemical plating method. Thereafter, the entire tube was washed with a sulfuric acid solution, and excess unreacted substance was removed, and at the same time the electrolyte membrane was rendered acid-type. Then, in the inside of the tube was injected, by use of a syringe, a mixture of carbon particles being loaded thereon 20% by mass of platinum and a mixed solution of 3 M potassium hydroxide and 3 M methanol, in a state of suspension. The tip of the syringe was used as it was as a connection terminal of the inner catalyst layer serving as the fuel electrode. On the other hand, a terminal was connected to the platinum deposit layer formed on the outer side of the tube serving as the air electrode. Thus, a single-cell of direct methanol fuel cell was constructed. Fig. 4(a) illustrates current-potential characteristics of the thus-obtained single-cell, while Fig. 4(b) illustrates current-power characteristics of the obtained single-cell.

Having described our invention as related to the present embodiments, it is our intention that the invention should not be limited by any of the details of the description, unless otherwise specified, but rather be construed broadly within its spirit and scope as set out in the accompanying claims.

## Claims

1. A fuel cell, comprising a tubular polymer electrolyte membrane, with a fuel electrode on one of inner and outer sides of the membrane, and with an air electrode on the other side of the membrane.

2. The fuel cell according to claim 1, wherein said fuel electrode and said air electrode each are composed of a carbon particle material on the surface of which catalyst fine-particulates are dispersed and loaded.

3. The fuel cell according to any one of the preceding claims, wherein said tubular polymer electrolyte membrane has a catalyst layer deposited or coated on a surface thereof.

4. The fuel cell according to any one of the preceding claims, wherein fuel is brought into contact with said fuel electrode on the surface of said tubular polymer electrolyte membrane, and an oxidizer is brought into contact with said air electrode on the surface of said tubular polymer electrolyte membrane.

5. The fuel cell according to any one of the preceding claims, wherein said fuel cell is utilized as a power source of a portable device.

6. The fuel cell according to any one of the preceding claims, wherein the fuel electrode is provided on the inner side of the membrane, and the air electrode is provided on the outer side of the membrane.

7. The fuel cell according to any one of claims 1 to 5, wherein the fuel electrode is provided on the outer side of the membrane, and the air electrode is provided on the inner side of the membrane.

8. The fuel cell according to any one of the preceding claims, which is a small fuel cell.

9. The fuel cell according to any one of the preceding claims, wherein the tubular polymer electrolyte membrane has an inner diameter of 0.2 to 10 mm, an outer diameter of 0.5 to 12 mm, and a length of 20 to 1,000 mm.
